(19) Europäisches Patentamt / European Patent Office / Office européen des brevets

(11) **EP 4 117 202 B1**

(12) **EUROPEAN PATENT SPECIFICATION**

(45) Date of publication and mention
of the grant of the patent:
**07.01.2026  Bulletin 2026/02**

(21) Application number: **21305952.0**

(22) Date of filing: **09.07.2021**

(51) International Patent Classification (IPC):
*H04B 10/61* (2013.01)     *H04B 10/63* (2013.01)

(52) Cooperative Patent Classification (CPC):
**H04B 10/63; H04B 10/612; H04B 10/615;
H04B 10/616**

(54) **COHERENT OPTICAL RECEIVER**

KOHÄRENTER OPTISCHER EMPFÄNGER

RÉCEPTEUR OPTIQUE COHÉRENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.01.2023  Bulletin 2023/02**

(73) Proprietors:
• **Mitsubishi Electric R & D Centre Europe B.V.
1119 NS Schiphol Rijk (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **FROC, Gwillerm
35700 RENNES (FR)**

(74) Representative: **Cabinet Le Guen Maillet
3, impasse de la Vigie
CS 71840
35418 Saint-Malo Cedex (FR)**

(56) References cited:
**EP-A1- 0 260 745      WO-A1-86/07513
GB-A- 2 214 381      US-B2- 8 437 645**

**Description**

TECHNICAL FIELD

The present invention generally relates to optical communications and more particularly to coherent optical receivers for optical communications.

RELATED ART

Optical communications, such as passive optical networks (PONs), are increasingly used to give network access (typically Internet access) to residential or office gateways, or data centers, in the scope of FTTH ("Fiber To The Home") technology deployment. Optical communications may also be used to ensure mobile infrastructure backhauling for instance in the scope of the deployment of 3G (3rd generation) or 4G (4th generation) mobile technologies using typically Point-to-Point arrangements.

With the emerging 5G (5th generation) mobile technology, fronthauling is about to appear and the needs in terms of data rate capabilities are significantly increased. One may refer to the International Mobile Telecommunications (IMT) recommendations ITU-R M.2083 "IMT Vision: Framework and overall objectives of the future development of IMT for 2020 and beyond", released in September 2015. In such a framework, fronthauling is achieved by moving upstream in the mobile infrastructure processing functions that were previously performed at base stations or nearby in the 3G or 4G mobile technologies. It is referred to as *split options* in the specifications 3GPP TR 38.801 V 14.0.0 "Study on new radio access technology: Radio access architecture and interfaces", released in March 2017 (see more particularly therein Section 11 and Table A-1).

Therefore, 5G mobile technology has a wider set of requirements as compared to FTTH requirements that have driven optical access technology evolution until now. 5G mobile technology translates thus into higher nominal data rates, reduced latency and denser deployment, among others. This translates to higher nominal data rates for optical access but also expected split ratio greater than 1:128 whereas FTTH split ratio is typically 1:64 with current PON systems.

To cope with this trend, coherent optical transmission is envisaged. Coherent optical transmission is a technique that uses modulation of amplitude and phase of light to enable transporting high volume of data over an optical fiber. Digital Signal Processing (DSP) is then typically used in order to achieve robust performance of coherent transmission over the optical fiber.

Coherent optical transmission is well-known since it has revolutionized the metro and core network segments: beyond its ability to capture the entire diversity of the channel and thus its ability to gain high spectral efficiency, one can cites good optical receiver sensitivity and good wavelength selectivity as well.

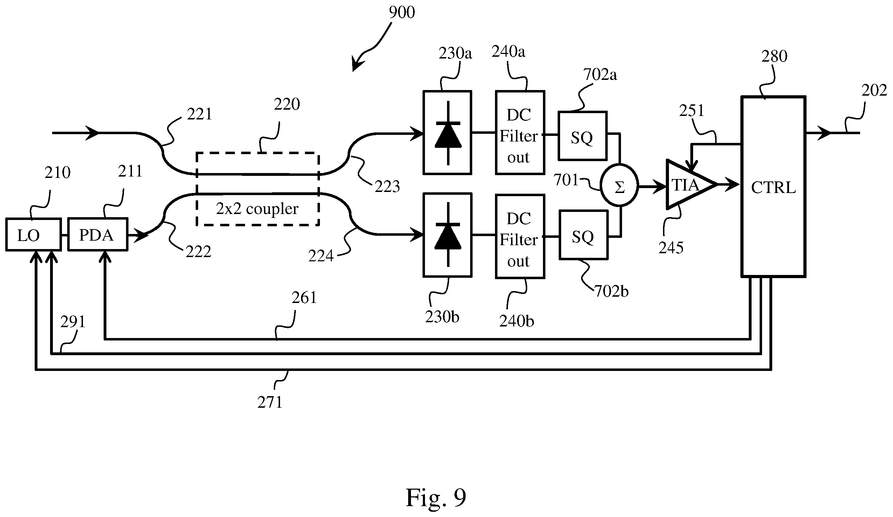

Fundamentals of coherent optical transmissions as used in metro and core network segments can be found in *"Fundamentals of Coherent Optical Fiber Communications "*, K. Kikuchi, Journal of Lightwave Technology, vol. 34, n°1, released in January 2016. This document depicts a coherent optical receiver employing phase and polarization diversities. Two phase-diversity homodyne receivers based on 90° optical hybrid power splitters in order to retrieve phase and quadrature components of injected coherent optical signal are placed in a polarization-diversity configuration, with usage of a common Local Oscillator (see more particularly therein Fig. 9). DSP arrangement has to be complementarily used in order to retrieve modulated symbols by digitally processing phase and polarization diversities output so as to restore complex signal amplitude in a stable manner despite fluctuations of carrier phase and signal state of polarization. To do so, the DSP arrangement comprises an anti-aliasing filter, a 4-channel Analogue-to-Digital Converter (ADC), a Frequency Domain Equalizer (FDE) enabling symbol rate extraction for driving back the ADC, an adaptive Finite Impulse Response (FIR) equalizer enabling clock phase recovery and a carrier phase estimator (see more particularly therein Fig. 18).

One main issue with coherent optical transmissions is that transmission over long-range optical fibers implies slow but large state-of-polarization changes large enough to be sensible at the coherent optical receiver. To ensure transmission continuity, two alternative approaches are used in order to avoid signal fading due to mismatch between the state of polarization of the signal received via the optical fiber and the state of polarization of the local oscillator. One approach is to compensate change of state of polarization induced by the long-range optical fiber using complex Digital Signal Processing with full diversity polarization receivers. The other approach is to track the state of polarization using Optical Phase Lock Loop (OPLL), for instance in the case where full polarization diversity cannot be recovered. Both approaches lead to complex analog and/or digital arrangements with at least two analog branches. One may for example refer to *"Endless Polarization Control Systems for Coherent Optics"*, Noé et al, IEEE Journal of Lightwave Technology, vol. 6, n°7, pp. 1199-1207, released in July 1988. As disclosed therein, tracking state of polarization thus typically supposes endless polarization transformer coupled with an adaptive control loop, which is a rather complex and costly arrangement.

It appears from the foregoing explanation that intrinsic theoretical and hardware implementation applied to metro and core network segments are not compatible with low design complexity, low power consumption, low manufacturing cost and complexity, low deployment cost and complexity, and small size, which are key requirements in the network access segment. Indeed, the quantity of equipment to install in the network access segment is far higher than in the metro and core network segments, especially to meet geographical density expectations of base stations in 5G mobile technology, and furthermore, the places to install such equipment are often particularly limited in terms of space (home device, base stations installation sites...).

Furthermore, the optical transmissions in metro and core network segments suffer from noise presence due to signal amplification used to cover point-to-point long distances. On the contrary, the optical transmissions in network access segments operate on shorter distances but suffer from low signal strength (quantity of photons received by the optical receiver) due to split ratio considerations, and thus optical receiver sensitivity is a main concern. Therefore, the coherent optical transmissions technology as used in the metro or core network segments is not suitable for 5G mobile technology.

In addition to the scope of the 5G mobile technology, coherent optical transmissions might be suitable for FTTH evolution. Indeed, the increasing demand for high-speed Internet gives rise to increasing the split ratio of current PON systems in addition to higher data rates. However, as for the deployment of base stations in the 5G mobile technology, Optical Network Units (ONUs) as used in such PON systems require low design complexity, low power consumption, low manufacturing cost and complexity, low deployment cost and complexity, and small size, since they are deployed in users premises or nearby. Furthermore, as for the 5G mobile technology context, the optical transmissions in metro and core network segments suffer from noise presence due to signal amplification used to cover point-to-point long distances. On the contrary, the optical transmissions in network access segments operate on shorter distances but suffer from low signal strength (quantity of photons received by the optical receiver) due to split ratio considerations, and thus optical receiver sensitivity is a main concern. Coherent optical transmissions technology as used in the metro or core network segments is therefore not suitable for FTTH evolution, either.

It may be noted from the art the document EP 0260745 A1, which discloses a heterodyne detector in which an optical signal output by a local oscillator is modified by an element influencing its state of polarization. The optical signal output by the local oscillator and an incoming optical signal are combined in a coupling arrangement associated with opto-electric converters so as to control the element influencing the state of polarization of the optical signal output by the local oscillator.

It may be noted from the art the document WO 8607513 A1, which discloses a coherent optical receiver in which in-phase and quadrature signal components are provided by employing a phase splitter to divide optical powers of incoming optical signal and of optical signal output by a local oscillator evenly between in-phase and quadrature detectors.

It is therefore desirable to provide a cost-effective solution of coherent optical receiver suitable for access network considerations. It is desirable to provide a solution that is as simple as possible.

SUMMARY OF THE INVENTION

To that end, it is proposed a coherent optical receiver as in the appended set of claims.

It includes a coherent optical receiver intended to receive an amplitude-shift keying modulated optical signal from a coherent optical transmitter, comprising: a local oscillator; a polarization-diversity actuator configured for modifying an optical signal output by the local oscillator; so as to form an optical signal with elliptical polarization with main axis orientation $\varphi_l$ and ellipticity phase shift $\psi_l$; a 2 x 2 coupler, having one input aiming at receiving the amplitude-shift keying modulated optical signal received from the coherent optical transmitter and the other input receiving another optical signal which is output by a set formed by a local oscillator and the polarization diversity actuator, so as to enable the local oscillator to provide a boosting effect to the amplitude-shift keying modulated optical signal received from the coherent optical transmitter; two photodiodes, one photodiode of said photodiodes being connected to one output of the 2 x 2 coupler and the other photodiode of said photodiodes being connected to the other output of the 2 x 2 coupler. The coherent optical receiver is arranged to combine contributions from both photodiodes in an additive or subtractive manner and to generate an electrical signal representing the combined contributions, and the coherent optical receiver further comprises a controlling unit in form of electronic circuitry configured for monitoring said electrical signal and for instructing a configuration change of the polarization diversity actuator by modifying the ellipticity main axis orientation $\varphi_l$ and/or the ellipticity phase shift $\psi_l$ when the electrical signal is below or equal to a predetermined threshold corresponding to a predetermined percentage of theoretical maximum achievable by the boosting effect. Thus, no complex Digital Signal Processing and no Optical Phase Lock Loop is used, and therefore cost-effective solution is provided for access network considerations. Moreover, using both output branches of the 2 x 2 coupler as stipulated above enables limiting situations in which the photocurrent processed by the electronic circuitry vanishes toward zero, which further limits necessity for modifying at least one ellipticity parameter of the optical signal output by the set formed by the local oscillator and the polarization diversity actuator.

In a particular embodiment, the modification of the ellipticity main axis orientation $\varphi_l$ is performed by applying a predefined shift equal to $\dfrac{\pi}{4}$ and the modification of the ellipticity phase shift $\psi_l$ is performed by applying a predefined shift

equal to $\dfrac{\pi}{2}$ . Thus, recovering effective boosting effect is easily achieved.

In a particular embodiment, the polarization-diversity actuator comprises a variable waveplate for enabling modification of the ellipticity main axis orientation $\varphi_l$ and for enabling modification of the ellipticity phase shift $\psi_l$. Thus, configuration modification is easily implemented, at low complexity and cost.

In a particular embodiment, the photodiodes are arranged as balanced photodiodes between a positive voltage supply and a negative voltage supply, and wherein the coherent optical receiver is arranged such that a difference in photocurrents generated by the photodiodes is sent to a transimpedance amplifier that produces an output voltage proportional to that difference which forms said electrical signal monitored by the controlling unit. Thus, in this embodiment, intrinsic photodiodes noise and dark current are easily removed.

In another particular embodiment, each photodiode is followed by a direct current filter, then by a transimpedance amplifier followed by a squaring module squaring a voltage electrical signal output by the transimpedance amplifier, wherein the coherent optical receiver further comprises an adder summing up the voltage electrical signals output by the transimpedance amplifiers so as to form said electrical signal monitored by the controlling unit. Thus, low complexity design is achieved (no need for matched photodiodes for example).

In yet another particular embodiment, each photodiode is followed by a direct current filter, then by a squaring module squaring a current electrical signal output by the direct current filter, wherein the coherent optical receiver further comprises an adder summing up the current electrical signals output by the squaring modules, the adder being followed by a transimpedance amplifier so as to form said electrical signal monitored by the controlling unit. Thus, low complexity design is achieved (common transimpedance amplifier for example).

In a particular embodiment, the electronic circuitry is further configured for modifying gain of the local oscillator and/or modifying gain of the transimpedance amplifier before deciding to apply configuration change by selecting at least one configuration modification among modification of the ellipticity main axis orientation $\varphi_l$ and/or modification of the ellipticity phase shift $\psi_l$. Thus, reactivity of the coherent optical receiver is improved.

In a particular embodiment, the electronic circuitry is configured for: checking whether a mean level of the voltage electrical signal output by the transimpedance amplifier over integration or averaging time is suitable, namely above the predefined threshold percentage and below an upper predefined threshold percentage so as to avoid saturation conditions; when the mean level is not suitable in that a signal mean level decrease is needed, decreasing signal mean level by adjusting gain of the transimpedance amplifier as first priority and decreasing signal mean level by adjusting gain of the local oscillator as second priority; and when the mean level is not suitable in that a signal mean level increase is needed, checking whether there is still margin either to increase gain of the transimpedance amplifier or to increase gain of the local oscillator, and when such margin exists, increasing signal mean level by adjusting gain of the transimpedance amplifier as first priority and increasing signal mean level by adjusting gain of the local oscillator as second priority, and otherwise, instructing configuration change by selecting at least one configuration modification among modification of the ellipticity main axis orientation $\varphi_l$ and/or modification of the ellipticity phase shift $\psi_l$. Thus, reactivity of the coherent optical receiver is further improved.

In a particular embodiment, the controlling unit includes a look-up table that links, on one hand, actuation of modification in the ellipticity main axis orientation $\varphi_l$ and/or of modification of the ellipticity phase shift $\psi_l$ and, on the other hand, commands to be applied to the polarization diversity actuator. Thus, modification in the ellipticity main axis orientation $\varphi_l$ and/or of modification of the ellipticity phase shift $\psi_l$ is easily implemented.

In a particular embodiment, various configurations of the polarization diversity actuator lead to a same modification of the ellipticity main axis orientation $\varphi_l$ and/or of the ellipticity phase shift $\psi_l$, and the look-up table further contains reactivity information for switching from any current configuration of the polarization diversity actuator to any other targeted configuration of the polarization diversity actuator, and the electronic circuitry is configured for, when changing configuration of the configuration of the polarization diversity actuator, selecting the configuration of the polarization diversity actuator which implies the shortest adjustment time in view of a current configuration of the polarization diversity actuator. Thus, reactivity of the polarization diversity actuator is improved.

It is further proposed an Optical Network Unit intended to be used in a Passive Optical Network, wherein the Optical Network Unit includes the coherent optical receiver as disclosed above, in any one of its embodiments, for receiving an amplitude-shift keying modulated optical signal transmitted by a coherent optical transmitter included in an Optical Line Terminal of the Passive Optical Network. Thus, low complexity and cost Optical Network Unit solution is provided to Passive Optical Network infrastructures.

BRIEF DESCRIPTION OF THE DRAWINGS

The characteristics of the invention will emerge more clearly from a reading of the following description of at least one example of embodiment, said description being produced with reference to the accompanying drawings, among which:

Fig. 1A schematically represents an arrangement of an optical communications system of passive optical network type, in which the present invention may be implemented;

Fig. 1B schematically represents an arrangement of an optical communications system of point-to-point type, in which the present invention may be implemented;

Fig. 2 schematically represents a coherent optical receiver arrangement that can be used in the optical communications system of Fig. 1A or Fig. 1B;

Fig. 3 schematically represents an arrangement of a polarization diversity actuator of the coherent optical receiver of Fig. 2;

Fig. 4 schematically represents an arrangement of a value decision block suitable for the coherent optical receiver of Fig. 2;

Fig. 5 schematically represents an algorithm performed by a controlling unit of the coherent optical receiver of Fig. 2 for adjusting configuration of the coherent optical receiver;

Fig. 6 schematically represents an algorithm performed by the controlling unit for adjusting configuration of the coherent optical receiver, in a particular embodiment;

Fig. 7 schematically represents another coherent optical receiver arrangement that can be used in the optical communications system of Fig. 1A or Fig. 1B;

Fig. 8 schematically represents another arrangement of the value decision block, suitable for the coherent optical receiver arrangement of Fig. 7; and

Fig. 9 schematically represents yet another coherent optical receiver arrangement that can be used in the optical communications system of Fig. 1A or Fig. 1B.

## DETAILED DESCRIPTION OF AT LEAST ONE EMBODIMENT

It has to be noticed that, since wavelength and frequency are tied together through a direct inverse relationship, these two terms are indifferently used by the one skilled in the art, as they refer to the same concept.

The present invention relates to a coherent optical receiver comprising a local oscillator and a polarization-diversity actuator configured for modifying an optical signal output by the local oscillator, so as to form an optical signal with elliptical polarization with main axis orientation $\varphi_l$ and ellipticity phase shift $\psi_l$;. The coherent optical receiver further comprises a 2 x 2 coupler and two photodiodes connected to the outputs of the 2 x 2 coupler, one photodiode of said photodiodes being connected to one output of the 2 x 2 coupler and the other photodiode of said photodiodes being connected to the other output of the 2 x 2 coupler. The coherent optical receiver is arranged to combine contributions from both photodiodes in an additive or subtractive manner and to generate an electrical signal representing the combined contributions, and further comprises a controlling unit in form of electronic circuitry configured for monitoring said electrical signal and for instructing a configuration change of the polarization diversity actuator by modifying the ellipticity main axis orientation $\varphi_l$ and/or the ellipticity phase shift $\psi_l$ when the electrical signal is below or equal to a predetermined threshold corresponding to a predetermined percentage of theoretical maximum achievable by the boosting effect. Several variant arrangements for combining the contributions from both photodiodes in an additive manner and for generating the electrical signal monitored by the controlling unit are disclosed hereinafter.

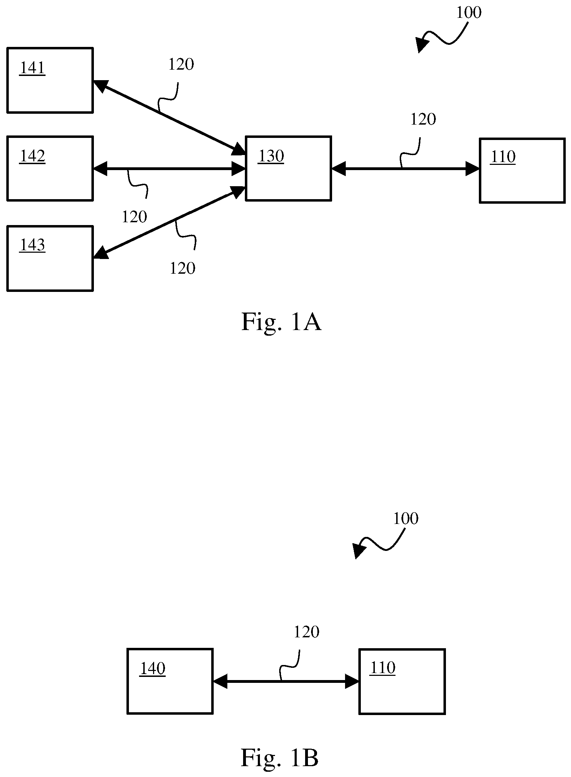

The present invention can be applied for implementing a low complexity coherent optical receiver intended to receive and detect optical signals transmitted by a coherent optical transmitter. More particularly, the coherent optical receiver is suitable for receiving amplitude-shift keying (ASK) modulated optical signals. For example, the amplitude-shift keying (ASK) modulated optical signals are Non-Return-to-Zero On-Off Keying (NRZ-OOK) modulated optical signals. Figs. 1A and 1B described hereafter introduce examples of contexts in which the present invention may be beneficial.

**Fig. 1A** schematically represents an arrangement of an optical communications system 100 of passive optical network type, in which the present invention may be implemented.

The optical communications system 100 in Fig. 1A comprises a master device 110, typically an OLT (*Optical Line Terminal*) device, and a plurality of slave devices 141, 142, 143, typically ONU (*Optical Network Units*) devices.

The optical communications system 100 in Fig. 1A may further comprise at least one spectral splitter device 130 and/or at least one power splitter.

Each spectral splitter device 130 comprises a pair of optical band-pass sets of filters for each PON, aiming at filtering respective wavelength bands, and thus enabling said spectral splitter device 130 to perform Wavelength Division Multiplexing (WDM). It can be noted that an equivalent arrangement can be obtained by sticking filtering films on reception diodes instead of using the spectral splitter device 130.

Each power splitter enables increasing the quantity of slave devices that can be connected to the master device 110, by dividing input signal power by the quantity of outputs towards the slave devices connected thereto. Each output of the power splitter device thus transmits the same optical information as received as input signal, the power splitter device having only impact on signals power.

The slave devices 141, 142, 143 are interconnected with the master device 110 via the at least one spectral splitter device 130 and/or the at least one power splitter using optical fibers 120.

In the context of PON, ONUs are typically intended to be located at end-user households for FTTH services, and OLT enables ONUs to access a metropolitan or a core network (not shown). Such PON may also be used for mobile network infrastructures services.

**Fig. 1B** schematically represents an arrangement of an optical communications system of point-to-point type, in which the present invention may be implemented.

The optical communications system 100 in Fig. 1B comprises a master device 110 and a slave device 140. The master device 110 and the slave device 140 are interconnected using optical fiber 120.

In mobile network fronthauling infrastructure, the slave device 140 is typically located at a remote radio head location and the master device 110 is located at a baseband unit (BBU) location. Such arrangement may also be used for mobile network backhauling infrastructure between BBUs and core network access terminals.

In both arrangements of Figs. 1A and 1B, optical transmissions of information from the master device 110 to one or more slave devices are referred to as *downlink transmissions* and in the reverse direction to as *uplink transmissions.*

In both arrangements of Figs. 1A and 1B, it is desirable to install a low complex and cost-effective optical receiver, at least in the slave devices 140, 141, 142, 143, and potentially in the master device 110. Moreover, it is desirable that the optical receiver provides high sensitivity so as to cope with potential low signal strength.

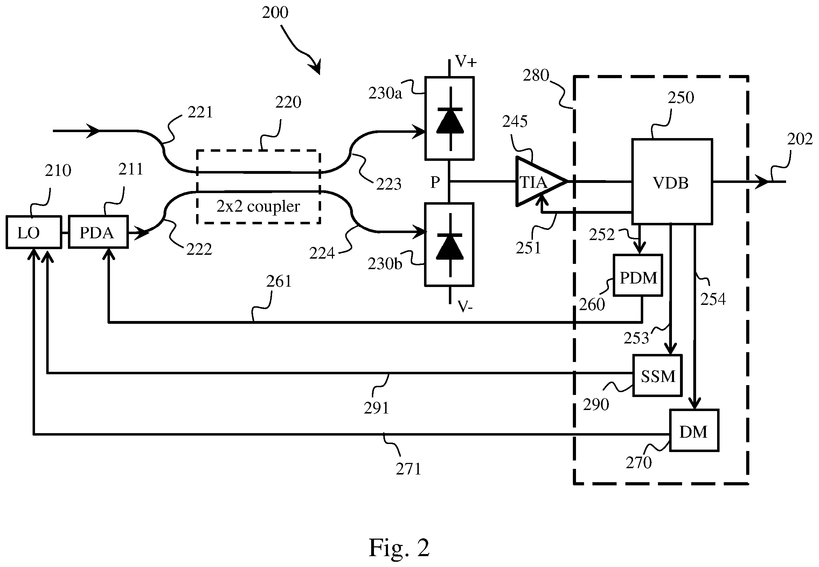

**Fig. 2** schematically represents a coherent optical receiver arrangement that can be used in the optical communications system 100 of Fig. 1A or Fig. 1B. The coherent optical receiver 200 outputs signals 202 to be processed for demodulation.

According to the arrangement shown in Fig. 2, the coherent optical receiver 200 comprises a 2x2 coupler 220. For example, the 2x2 coupler 220 is a fiber fused coupler or a directional coupler.

On one input 221 of the 2x2 coupler 220 is injected an optical signal transmitted by a coherent optical transmitter. On the other input 222 of the 2x2 coupler 220 is injected another optical signal which is output by a set formed by a local oscillator LO 210 and a polarization diversity actuator PDA 211.

The local oscillator LO 210 is a laser diode or an arrangement comprising a laser diode. It has to be noted that vertical-cavity surface-emitting laser (VCSEL) may be used as local oscillator.

The optical signal output by the 2x2 coupler 220 at the output 223 is captured by a photodiode 230a of the coherent optical receiver 200.

The optical signal output by the 2x2 coupler 220 at the output 224 is captured by a photodiode 230b of the coherent optical receiver 200, which is identical to the photodiode 230a. The photodiodes 230a and 230b are matched photodiodes (same semiconductor chip manufactured following the same process).

The photodiodes 230a and 230b are arranged as balanced photodiodes, i.e., for balanced photodetection (a.k.a. differential photodetection), between a positive voltage supply V+ and a negative voltage supply V-.

The difference in photocurrents generated by the photodiodes 230a and 230b, at point P in Fig. 2, is captured by a transimpedance amplifier TIA 245 that produces an output voltage proportional to that difference.

Any asymmetry in the electronics and optical paths should be avoided. Since high-frequency detection is targeted, matched optical fiber lengths have to be used between the outputs 223 and 224 of the 2x2 coupler 220, since otherwise unexpected phase shifts may occur and impact sensitivity, and the 2x2 coupler 220 is a lossless symmetric coupler with a phase shift $\xi_c$ introduced by the 2x2 coupler 220 between its inputs such that $\xi_c = \dfrac{\pi}{2}$.

Generally speaking, a polarized optical signal $E(t)$ can be written in the Jones representation as follows:

$$E(t) = E_0\, e^{i(2\pi\omega t + \phi)} \begin{pmatrix} \cos\varphi \\ e^{i\psi}\sin\varphi \end{pmatrix}$$

which corresponds to a vector that describes an ellipse in a transverse plane with respect to the propagation direction of the optical signal. In the formula above, $E_0$ is the amplitude of the optical signal, $\omega$ is the wavelength of the optical signal and $\phi$ is the phase of the optical signal. Moreover, in the formula above, $\varphi \in [0; \pi[$ is the orientation of the main axis of the polarization ellipse and $\psi$ is the ellipticity phase shift. We can find the particular cases of $\psi = 0$ for a linear polarization and of

$$\psi = (2k+1)\frac{\pi}{2},\ k \in \mathbb{N}$$, for a circular polarization.

Thus, considering amplitude shift keying optical signals, the photodiode 230a outputs a current $i_a(t)$ that can be expressed as follows:

$$i_a(t) = \left(E_{0s}{}'\right)^2 + \left(E_{0l}{}'\right)^2$$

$$+2E_{0s}{}'E_{0l}{}'\cos(\Delta\varphi)\cos\left(\frac{\Delta\psi}{2}\right)\sin\left(2\pi\Delta\upsilon t + \Delta\phi + \frac{\Delta\psi}{2}\right)$$

$$-2E_{0s}{}'E_{0l}{}'\cos(\varphi_s + \varphi_l)\sin\left(\frac{\Delta\psi}{2}\right)\cos\left(2\pi\Delta\upsilon t + \Delta\phi + \frac{\Delta\psi}{2}\right)$$

wherein $E_{0s}{}' = R.\ E_{0s}$ and $E_{0l}{}' = R.\ E_{0l}$ with $R<1$ being a conversion rate by the photodiode 230 of incident photons into electrons,

wherein $\Delta\varphi = \varphi_s - \varphi_l$ is a difference in orientation of the main axes of the polarization ellipses,

wherein $\Delta\upsilon = \omega_s - \omega_l$ is a wavelength detuning,

wherein $\Delta\phi = \phi_s - \phi_l$ is a phase shift between the optical signal received from the coherent optical transmitter and the optical signal output by the set formed by local oscillator LO 210 and the polarization diversity actuator PDA 211, and wherein the optical signal parameters with the index $s$ concern the optical signal received from the coherent optical transmitter, with signal amplitude $E_{0s}$ modulated at modulation symbol duration rate, and the optical signal parameters with the index $l$ concern the optical signal output by the set formed by local oscillator LO 210 and the polarization diversity actuator PDA 211, with non-modulated signal amplitude $E_{0l}$.

Similarly, the photodiode 230b outputs a current $i_b(t)$ that can be expressed as follows:

$$i_b(t) = \left(E_{0s}{}'\right)^2 + \left(E_{0l}{}'\right)^2$$

$$-2E_{0s}{}'E_{0l}{}'\cos(\Delta\varphi)\cos\left(\frac{\Delta\psi}{2}\right)\sin\left(2\pi\Delta\upsilon t + \Delta\phi + \frac{\Delta\psi}{2}\right)$$

$$+2E_{0s}{}'E_{0l}{}'\cos(\varphi_s + \varphi_l)\sin\left(\frac{\Delta\psi}{2}\right)\cos\left(2\pi\Delta\upsilon t + \Delta\phi + \frac{\Delta\psi}{2}\right)$$

Thus, the photocurrent signal output by the photodiode 230b (second branch) differs from the photocurrent signal output by the photodiode 230a (first branch) by a phase shift of $\pi$ in so-called mixing detuning terms (the two last lines of each expression above of $i_a(t)$ and $i_b(t)$).

It has to be understood here that the optical signal output by the set formed by local oscillator LO 210 and the polarization diversity actuator PDA 211 is not modulated with respect to transmission of information, but the amplitude $E_{0l}$ may, in some embodiments as detailed hereafter, be changed in order to help improving optical detection dynamics. It thus means that variations of the signal amplitude $E_{0l}$ contain no meaningful information as such.

At point P, the balanced photodetection jointly performed by the photodiodes 203a and 203b leads to a current $i_P(t)$ transmitted to the transimpedance amplifier TIA 245 which equals to the photocurrent $i_b(t)$ output by the photodiode 203b minus the photocurrent $i_a(t)$ output by the photodiode 203a, and which can therefore be expressed as follows:

$$i_P(t) =$$

$$2 * \left\{ -2E_{0s}{}'E_{0l}{}'\cos(\Delta\varphi)\cos\left(\frac{\Delta\psi}{2}\right)\sin\left(2\pi\Delta\upsilon t + \Delta\phi + \frac{\Delta\psi}{2}\right) \right.$$

$$\left. +2E_{0s}{}'E_{0l}{}'\cos(\varphi_s + \varphi_l)\sin\left(\frac{\Delta\psi}{2}\right)\cos\left(2\pi\Delta\upsilon t + \Delta\phi + \frac{\Delta\psi}{2}\right) \right\}$$

Common-mode rejection is thus performed by the balanced photodetection, which thus removes the direct current (DC) components of the photocurrents output by the photodiode 203a and by the photodiode 203b, as well as intrinsic photodiodes noise and dark current.

It can also be noted that, when $E_{0l} = E_{0s}$, $\omega_l = \omega_s$, $\varphi_l = \varphi_s$ and $\phi_l = \phi_s + (2k+1)\pi$, $k \in \mathbb{N}$, then the photocurrent $i_P(t)$ at point P vanishes to zero at any time. And it can be further noted that such a situation occurs only for two fields that differ only by a phase shift (same amplitude, same frequency, same state of polarization with fields shifted by $\pi$).

Consequently, the local oscillator LO 210 enables boosting the optical signal coming from the optical fiber, as far as the following situations are not met:

•

$$\cos(\Delta\varphi) = 0 \text{ and } \cos(\varphi_s + \varphi_l) = 0$$

•

$$\cos(\Delta\varphi) = 0 \text{ and } \sin\left(\frac{\Delta\psi}{2}\right) = 0$$

•

$$\cos\left(\frac{\Delta\psi}{2}\right) = 0 \text{ and } \cos(\varphi_s + \varphi_l) = 0$$

Apart from these situations, the local oscillator LO 210 thus enables increasing sensitivity of the coherent optical receiver, which, among others, enables improving split ratio over PON and enables increasing transmission data rate.
In order to avoid the situations above, the polarization diversity actuator PDA 211 is controlled so as to modify on demand the optical signal as output by the local oscillator LO 210. In other words, controlling the polarization diversity actuator PDA 211 enables escaping the situations above when encountered. Indeed, even a small change of state of polarization of the signal injected in the input 222 of the 2x2 coupler 220 creates enough difference so that at least one of the following terms, referred to as *boosting terms,*

$$-2E_{0s}{}'E_{0l}{}'\cos(\Delta\varphi)\cos\left(\frac{\Delta\psi}{2}\right)\sin\left(2\pi\Delta\upsilon t + \Delta\phi + \frac{\Delta\psi}{2}\right)$$

and

$$2E_{0s}{}'E_{0l}{}'\cos(\varphi_s + \varphi_l)\sin\left(\frac{\Delta\psi}{2}\right)\cos\left(2\pi\Delta\upsilon t + \Delta\phi + \frac{\Delta\psi}{2}\right)$$

does not equal zero. Indeed, a boosting effect is obtained once at least one of these boosting terms does not equal zero and further when these terms do not compensate for each other.
In order to control the polarization diversity actuator PDA 211, the coherent optical receiver 200 further comprises a controlling unit 280 in the form of electronic circuitry, which is present at output of the transimpedance amplifier TIA 245 and loops back to the polarization diversity actuator PDA 211 via a line 261. The controlling unit 280 may further also control the local oscillator LO 210 and therefore loop back to the local oscillator LO 210 via at least one line, for example a line 271 and a line 291. Preferably, the controlling unit 280 loops back to the transimpedance amplifier TIA 245 for electrical gain control via a line 251.
The electronic circuitry forming the controlling unit 280 may be a chip or chipset, such as an FPGA (*Field-Programmable Gate Array*) or an ASIC (*Application-Specific Integrated Circuit*). In a variant, the electronic circuitry forming the controlling unit 280 may be a processor (microcontroller, a DSP (Digital Signal Processor)...) accompanied by at least one memory. After being powered on, the processor is capable of reading instructions from the memory and executing these instructions for implementing functions of the controlling unit 280. In this case, the functions of the controlling unit 280 are in software form, which may be stored on a non-transitory storage medium, such as an SD (Secure Digital) card.
It has to be understood that the controlling unit 280 does not perform tracking of the state of polarization. In the case of the present invention, there is indeed no need to precisely know the state of polarization of the optical signal received from the coherent optical transmitter, neither the state of polarization of the optical signal output by the set formed by the local oscillator LO 210 and the polarization diversity actuator PDA 211. In the scope of the present invention, the controlling unit 280 determines whether or not the state of polarization of the set formed by the local oscillator LO 210 and the polarization diversity actuator PDA 211 is suitable for obtaining operable boosting terms, and if not (without knowing which relative states of polarization led to such situation), the controlling unit 280 changes the state of polarization of the optical signal output by the set formed by the local oscillator LO 210 and the polarization diversity actuator PDA 211. Thus, no optical phase lock loop is needed, and no complex digital signal processing is needed, which minimizes design complexity. Operable boosting terms are boosting terms greater than, or equal to, a predefined threshold percentage (e.g., 20%) of their theoretical maximum, which is the maximum of the strength of the optical signal output by the local oscillator LO 210.

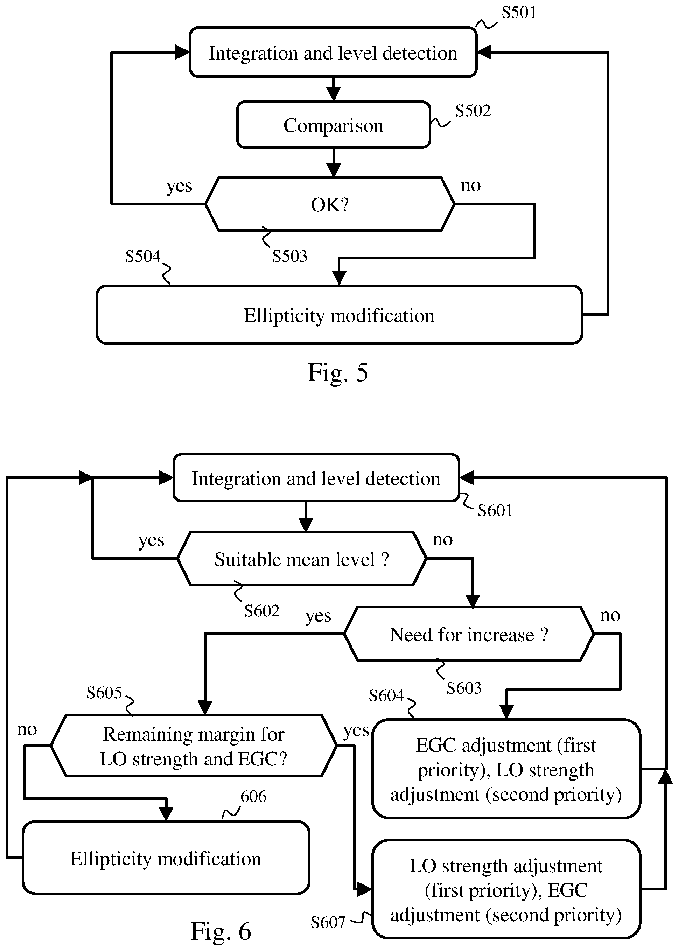

Under some circumstances as notably disclosed hereafter with respect to Fig. 6, the controlling unit 280 may decide instead as a temporary action, or as a complementary action, to modify the strength (optical gain) of the optical signal output by the local oscillator LO 210. Under some circumstances as notably disclosed hereafter with respect to Fig. 6, the controlling unit 280 may decide instead as a temporary action, or as a complementary action, to modify electrical gain of the transimpedance amplifier TIA 245.

Thus, the function of the controlling unit 280 is to ensure that the electrical signal $i_P(t)$ does not vanish to zero while the optical signal received from the coherent optical transmitter contains useful information and thus to ensure that the boosting effect supposed to be provided by the local oscillator LO 210 is maintained as much as possible above the predefined threshold percentage mentioned above. It means that the boosting effect may not need to be adjusted although degradation thereof is detected by the controlling unit 280 as far as the condition relative to the predefined threshold percentage mentioned above is fulfilled.

Thus, the controlling unit 280 does notably not need to continuously run but rather operates at intervals, e.g., on a regular basis. Indeed, as explained hereafter, once the controlling unit 280 has adjusted the optical signal output by the set formed by the local oscillator LO 210 and the polarization diversity actuator PDA 211, some time lapses before occurrence of a new situation in which the electrical signal $i_P(t)$ risks vanishing to zero while the optical signal received from the coherent optical transmitter contains useful information, since transmissions over long range optical fibers imply slow changes of state of polarization. The controlling unit 280 may take into account evolution history of the electrical signal output by the transimpedance amplifier TIA 245, so as to decide when to activate next. The controlling unit 280 may control standby time proportionally with the distance of electrical signal $i_P(t)$ with respect to the predefined threshold percentage mentioned above. In other words, the controlling unit 280 may increase standby time when evolution of the electrical signal $i_P(t)$ is far from risking vanishing to zero and may decrease standby time when evolution of the electrical signal $i_P(t)$ is in reverse situation.

Once the controlling unit 280 detects that the electrical signal output by the transimpedance amplifier TIA 245 is below a predetermined threshold, the controlling unit 280 controls the polarization diversity actuator PDA 211 so as to change the state of polarization of the optical signal output by the set formed by the local oscillator LO 210 and the polarization diversity actuator PDA 211. The boosting effect is consequently obtained in the case where the optical signal received from the coherent optical transmitter contains useful information, since a sensitive change of the state of polarization would allow escaping the encountered situation where the electrical signal $i_P(t)$ has vanished to zero although the optical signal received from the coherent optical transmitter contains useful information. In the worst case, it can be demonstrated that the contribution related to the boosting terms is greater than the contribution of the optical signal received from the coherent optical transmitter as soon as the states of polarization of both optical signals injected in the 2x2 coupler 220 are shift by a value that is small percentage (e.g., 5%) of the distance between adjacent optimal relative states of polarization.

After several kilometers in the optical fiber, the state of polarization of the optical signal originally transmitted by the coherent optical transmitter is randomly distributed over the Poincaré sphere. Thus, the state of polarization of the optical signal as received by the coherent optical receiver 200 is very likely to be elliptical. Thus, the optical signal output by the set formed by the local oscillator LO 210 and the polarization diversity actuator PDA 211 is controlled to be elliptically polarized.

In order to change the state of polarization of the optical signal output by the set formed by the local oscillator LO 210 and the polarization diversity actuator PDA 211 when the electrical signal $i_P(t)$ falls in a zero region although an optical signal containing useful information is received from the coherent optical transmitter, the controlling unit 280 instructs the polarization diversity actuator PDA 211 to change at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211. It enables making operable the boosting terms and recovering a sensitive photocurrent. In a particular embodiment, the controlling unit 280 instructs the polarization diversity actuator PDA 211 to change, by a predefined shift, the at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211.

In a preferred embodiment, the predefined shift targets a stationary extremum of the electrical signal $i(t)$. In this preferred embodiment, the predefined shift is $\dfrac{\pi}{4}$ for the orientation axis $\varphi_l$ (and consequently for $\Delta\varphi$) and $\dfrac{\pi}{2}$ for the ellipticity phase shift $\psi_l$ (and consequently for $\Delta\psi$).

In a particular embodiment, the controlling unit 280 comprises a value decision block VDB 250 and a polarization diversity manager PDM 260. In a more particular embodiment, the controlling unit 280 further comprises a signal strength manager SSM 290. In a yet more particular embodiment, the controlling unit 280 further comprises a detuning manager DM 270.

The value decision block VDB 250 analyzes the electrical signal output by the transimpedance amplifier TIA 245. The value decision block VDB 250 thus analyzes the voltage output by the transimpedance amplifier TIA 245. To do so, the value decision block VDB 250 compares the value of the voltage output by the transimpedance amplifier TIA 245 with the predefined threshold percentage (e.g., 20%) of the theoretical maximum achievable by the boosting effect, i.e., theoretical maximum achievable by the boosting terms. The theoretical maximum is defined according to the gain of the local oscillator LO 210, to the conversion rate $R$ by the photodiodes 230a and 230b of incident photons into electrons and to the gain of the transimpedance amplifier TIA 245. When the voltage output by the transimpedance amplifier TIA 245 is below the predefined threshold percentage of the theoretical maximum achievable thanks to the boosting terms, the value decision block VDB 250 acts to change configuration of the polarization diversity actuator PDA 211 and/or of the local oscillator LO 210. According to the present invention, the value decision block VDB 250 acts to change configuration of the polarization diversity actuator PDA 211 so as to modify at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211.

Under some circumstances, the value decision block VDB 250 may, as an alternative or in complement, modify strength of the optical signal output by the local oscillator LO 210 (i.e., modification of the gain of the local oscillator LO 210) and/or modify the gain of the transimpedance amplifier TIA 245. Thus, the value decision block VDB 250 improves the signal-to-noise ratio of the electrical signal to be used for performing demodulation.

The value decision block VDB 250 may take into account evolution history of the electrical signal output by the transimpedance amplifier TIA 245, as already explained.

The value decision block VDB 250 may further implement a detuning analysis function by detecting a beating signal over a predefined quantity of modulation symbols at a frequency equal to the wavelength detuning, i.e., deviation between the wavelength of the optical signal received from the coherent optical transmitter and the wavelength of the optical signal output by the set formed by the local oscillator LO 210 and the polarization diversity actuator PDA 211. Detection of the beating signal may be performed, as known in the art, thanks to Fast Fourier Transform and spectral analysis for identifying peak at a beating frequency which corresponds to the wavelength detuning $\Delta\upsilon$. Another approach, as known in the art, is for example to perform detection of the beating signal by analog convolution with a cosine signal. In case of detuning, the value decision block VDB 250 then acts for adjusting, in accordance to the detected beating frequency, the wavelength of the optical signal output by the local oscillator LO 210. The value decision block VDB 250 accordingly instructs the detuning manager DM 270 to change wavelength configuration of the local oscillator LO 210.

The polarization diversity manager PDM 260 controls the polarization diversity actuator PDA 211 via the line 261. The polarization diversity manager PDM 260 converts instructions, which are received from the value decision block VDB 250 via a line 252 for modifying at least one ellipticity parameter among the angle $\varphi_l$ of orientation of the main axis of the polarization ellipse and the ellipticity phase shift $\psi_l$ of the optical signal output by the set formed by the local oscillator LO 210 and the polarization diversity actuator PDA 211, into adequate commands suitable to the polarization diversity actuator PDA 211 (e.g., drive voltage change). The polarization diversity manager PDM 260 consequently controls the polarization diversity actuator PDA 211 via the line 261.

The signal strength manager SSM 290 controls the local oscillator LO 210 via the line 291. The signal strength manager SSM 290 converts instructions, which are received from the value decision block VDB 250 via a line 253 for modifying the strength of the signal output by the local oscillator LO 210, into adequate commands suitable to the local oscillator LO 210. The signal strength manager SSM 290 consequently controls the local oscillator LO 210 via the line 291. For instance, the signal strength manager SSM 290 adjusts injected current injected when the local oscillator LO 210 is a Directly Modulated Laser (DML), or adjusts drive voltage signature when the oscillator LO 210 is an Electro-absorption Modulated Laser (EML).

The detuning manager DM 270 controls the local oscillator LO 210 via a line 271. The detuning manager DM 270 converts instructions, which are received from the value decision block VDB 250 via a line 253 for modifying the wavelength of the optical signal output by the local oscillator LO 210, into adequate commands suitable to the local oscillator LO 210. The detuning manager DM 270 consequently controls the local oscillator LO 210 via the line 271. For instance, the detuning manager DM 270 adjusts the Peltier current when the local oscillator LO 210 is equipped with a Peltier module, or drive voltage when the local oscillator LO 210 is equipped with an optical ring resonator.

Furthermore, the value decision block VDB 250 may provide instructions to the transimpedance amplifier 245 via the line 251 for modifying electrical gain of the transimpedance amplifier 245.

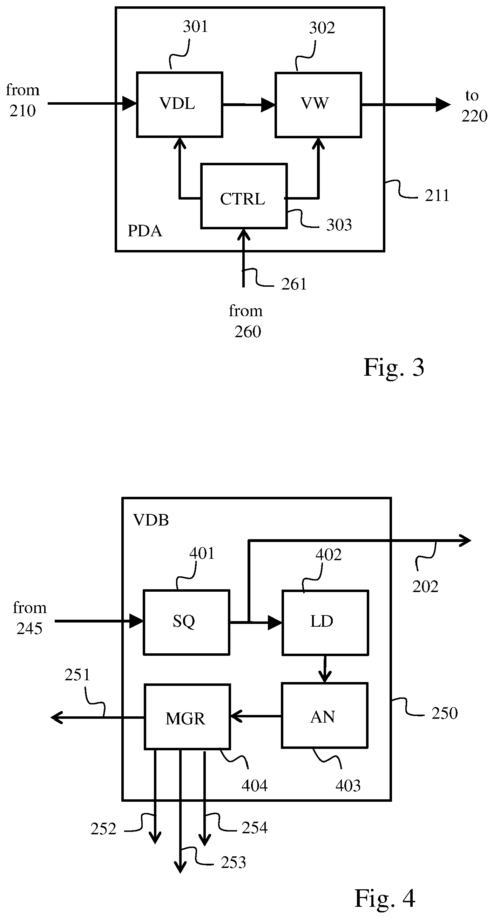

**Fig. 3** schematically represents a particular embodiment of the polarization diversity actuator PDA 211. The particular embodiment of Fig. 3 is suitable for using a local oscillator providing a linearly-polarized optical signal, as commonly found off-the-shelf; however, the particular embodiment of Fig. 3 is also suitable for using a local oscillator providing a circular or elliptical polarization.

Low costs laser used nowadays in network access segment are typically semiconductor lasers that are linearly polarized. Such lasers can be used as the local oscillator LO 210. A way to transform a linear polarization into an elliptical polarization is to place a waveplate (also referred to as *wavelength plate*) at the output of the laser. Waveplates are based on birefringent materials with two orthogonal axes of different velocity, which induce a phase shift between the projections of a given field on the two axes of the birefringent materials. Injecting therein a linearly-polarized optical signal outputs an elliptically-polarized optical signal. It however may be taken into account that a waveplate couples both polarization ellipticity and phase shift, which means that phase shift between the optical signal output by the local oscillator LO 210 and the optical signal received from the coherent optical transmitter may also be impacted by the waveplate. Thus, in case the ellipticity has to be independently controlled with a waveplate, a compensating phase shift may be applied on both axes of the optical signal output by the local oscillator LO 210 to counter the waveplate phase shift thus introduced.

In order to control ellipticity of the optical signal output by the set formed by the local oscillator LO 210 and the polarization diversity actuator PDA 211, a variable waveplate can be used. Variable waveplates are particular waveplates the phase shift of which between their slow (extraordinary) and fast (ordinary) axes can be controlled. Liquid crystal variable retarders and pockets cells are examples of variable waveplates. Tunable highly birefringent photonic Liquid Crystal Fibers can alternatively be used. Retardance is then tuned over a specified range by changing drive voltage.

According to the embodiment shown in Fig. 3, the optical signal issued from the local oscillator LO 210 is preferably injected in a variable delay line VDL 301. The variable delay line VDL 301 can be built from isotropic material. The variable delay line VDL 301 introduces adjustable delay on the overall optical signal, which therefore impacts the phase of the optical signal. The variable delay line VDL 301 is here used to set or adjust the phase $\phi_l$ of the optical signal output by the local oscillator LO 210. For example, the variable delay line VDL 301 is a liquid crystal variable retarder with a delay parameter $\Delta L$ in working range $[0; 2\pi]$ and aligned in factory with the polarization of a linearly-polarized laser forming the local oscillator LO 210.

At the output of the variable delay line VDL 301 (if any), the polarization diversity actuator PDA 211 further comprises a variable waveplate VW 302. The variable waveplate VW 302 is here used to adjust $\psi_l$ and thus to consequently mitigate the difference between $\psi_l$ and $\psi_s$. As already mentioned, the variable waveplate VW 302 may further impact phase shift; in this case, the variable delay line VDL 301 and the variable waveplate VW 302 can be used to jointly adjust $\phi_l$ and thus to consequently mitigate the difference between $\phi_l$ and $\phi_s$.

The polarization diversity actuator PDA 211 may further comprise a controller CTRL 303 configured for interpreting instructions received from the controlling unit 280, and more particularly from the polarization diversity manager PDM 260, and for converting these instructions into commands (such as appropriate drive voltage) to the variable delay line VDL 301 and the variable waveplate VW 302.

In a variant, the controlling unit 280, and more particularly the polarization diversity manager PDM 260, directly transmits commands (such as appropriate drive voltage) to the variable delay line VDL 301 and the variable waveplate VW 302. In this case, the controlling unit 280, and more particularly the polarization diversity manager PDM 260, may comprise a look-up table LUT that links, on one hand, actuation of changes in $\varphi_l$ (and consequently in $\Delta\varphi$) and/or in $\psi_l$ (and consequently in $\Delta\psi$) and, on the other hand, commands to be applied to the polarization diversity actuator PDA 211, more particularly to the variable delay line VDL 301 and the variable waveplate VW 302. Various configurations of the polarization diversity actuator PDA 211, namely of the variable waveplate VW 302 in the arrangement of Fig. 3, may lead to a same modification of $\varphi_l$ and/or of $\psi_l$. Therefore, in a particular embodiment, the look-up table LUT further contains reactivity information for switching from any current configuration of the polarization diversity actuator PDA 211 to any other targeted configuration of the polarization diversity actuator PDA 211. More particularly, the look-up table LUT further contains reactivity information for switching from any current configuration of the variable waveplate VW 302 to any other targeted configuration of the variable waveplate VW 302. The look-up table LUT may further contain reactivity information for switching from any current configuration of the variable delay line VDL 301 to any other targeted configuration of the variable delay line VDL 301. Consequently, when the controlling unit 280, and more particularly the polarization diversity manager PDM 260, has to apply change in $\varphi_l$ and/or in $\psi_l$, it selects the configuration of the polarization diversity actuator PDA 211, namely of the variable waveplate VW 302, which implies the shortest adjustment time in view of the current configuration of the polarization diversity actuator PDA 211, namely of the variable waveplate VW 302. Moreover, knowledge of this adjustment time of the variable waveplate VW 302, and possibly of the variable delay line VDL 301, may be used by the controlling unit 280 in order to determine at which instant adjustment is effectively in place.

**Fig. 4** schematically represents a particular embodiment of the value decision block VDB 250 which is suitable to the arrangement of coherent optical receiver 200 shown in Fig. 2.

The value decision block VDB 250 comprises a level detector LD 402. The level detector LD 402 detects voltage output by the transimpedance amplifier TIA 245 and performs conversion into digital data more easily handled for further analysis.

The value decision block VDB 250 further comprises an analyzer AN 403. The analyzer AN 403 receives digital data from the level detector LD 402. The analyzer AN 403 compares the value of the voltage output by the transimpedance amplifier TIA 245 with the predefined threshold percentage (e.g., 20%) of the theoretical maximum achievable thanks to the boosting terms. The analyzer AN 403 then makes a decision regarding whether or not at least one action has to be taken in order to ensure that operable boosting terms are met.

The value decision block VDB 250 further comprises a manager MGR 404. The manager MGR 404 receives from the analyzer AN 403 instructions with respect to action to be taken. The manager MGR 404 consequently provides polarization diversity-related instructions to the polarization diversity manager PDM 260 via the line 252 and/or signal strength instructions to the signal strength manager SSM 290 via the line 253 and/or electrical gain control instructions to the transimpedance amplifier 245 via the line 251 and/or detuning-related instructions to the detuning manager DM 270 via the line 254.

The value decision block VDB 250 further comprises a squaring module SQ 401. The squaring module SQ 401 squares the electrical signal received from the transimpedance amplifier TIA 245 (i.e., the squaring module SQ 401 multiplies the input electrical signal by itself). It simplifies analysis performed by the analyzer AN 403, by ensuring that only positive values are handled (which is easier for comparing them in absolute value with a threshold). To do so, the squaring module SQ 401 is for example an analog amplifier with both inputs receiving the electrical signal received in input of the value decision block VDB 250. Usage of the squaring module SQ 401 further advantageously increases contrast for the boosting terms with respect to the optical signal received from the coherent optical transmitter.

The value decision block VDB 250 outputs the signals 202 to be processed for demodulation. These signals may be the output of the squaring module SQ 401. These signals may simply be the output of the transimpedance amplifier TIA 245.

**Fig. 5** schematically represents an algorithm performed by the controlling unit 280 for configuring the coherent optical receiver 200. The controlling unit 280 continuously receives analog electrical signal from the transimpedance amplifier TIA 245.

In a step S501, the controlling unit 280 performs signal level detection with respect to the electrical signal output by the transimpedance amplifier TIA 245, as already explained above. The controlling unit 280 thus monitors the electrical signal output by the transimpedance amplifier TIA 245. The step S501 outputs digital representation, according to a sampling rate, of the analog electrical signal (voltage) output by the transimpedance amplifier TIA 245. Level detection preferably includes integration or averaging over a predetermined quantity of samples.

In a step S502, the controlling unit 280 performs comparison of the level detected in the step S501 with the predefined threshold percentage (e.g., 20%) of the theoretical maximum signal level which is achievable thanks to the boosting terms. As already mentioned, the theoretical maximum is defined according to the gain of the local oscillator LO 210, to the conversion rate $R$ by the photodiode 230 of incident photons into electrons and to the gain of the transimpedance amplifier TIA 245. The conversion rate $R$ by the photodiode 230 of incident photons into electrons is known to the controlling unit 280 by pre-configuration (e.g., in factory). When the gain of the local oscillator LO 210 is not defined (i.e., controlled) by the controlling unit 280, the gain of the local oscillator LO 210 is known to the controlling unit 280 by pre-configuration (e.g., in factory). When the gain of the transimpedance amplifier TIA 245 is not defined (i.e., controlled) by the controlling unit 280, the gain of the transimpedance amplifier TIA 245 is known to the controlling unit 280 by pre-configuration (e.g., in factory). Alternatively, the theoretical maximum signal level which is achievable thanks to the boosting terms is known to the controlling unit 280 by pre-configuration (e.g., in factory). Further alternatively, the applicable threshold is known to the controlling unit 280 by pre-configuration (e.g., in factory). In this latter case, the pre-configured applicable threshold remains a predefined threshold percentage (e.g., 20%) of the theoretical maximum signal level which is achievable thanks to the boosting terms, except that the effective value of the predefined threshold percentage (e.g., 20%) is not dynamically determined by the controlling unit 280. The predefined threshold percentage may change over time: for example, the controlling unit 280 is instructed by an application layer of the optical coherent receiver 200, or by a demodulator of the optical coherent receiver 200, that means signal-to-noise ratio of the electrical signal should be strengthened or, on the contrary, loosened.

In a step S503, the controlling unit 280 checks whether or not the comparison shows that the level detected in the step S501 is greater than, or equal to, the threshold in question. When the level detected in the step S501 is lower than the threshold in question, a step S504 is performed. When the level detected in the step S501 is greater than, or equal to, the threshold in question, the step S501 is repeated. A waiting or standby time may be inserted before executing again the step S501. The duration of the waiting or standby time is less than the time observed with optical fibers to change polarization of transported optical signals in a predefined proportion in the polarization space. For instance, the waiting or standby time duration is 100 milliseconds.

In the step S504, the controlling unit 280 instructs a configuration change of the set formed by the local oscillator LO 210 and the polarization diversity actuator PDA 211, wherein the configuration change is at least one configuration modification selected among the following set Li: modification of the ellipticity main axis orientation $\varphi_l$ and/or modification of the ellipticity phase shift $\psi_l$.

Then, the step S501 is repeated. No waiting time is preferably applied at that time, in order for the controlling unit 280 to determine whether another phase shift modification and/or ellipticity modification of the optical signal output by the set formed by the local oscillator LO 210 and the polarization diversity actuator PDA 211 has to be performed.

**Fig. 6** schematically represents an algorithm performed by the controlling unit 280 for adjusting configuration of the coherent optical receiver 200, in a particular embodiment. In this particular embodiment, the controlling unit 280 adjusts configuration of the coherent optical receiver 200, when judging that level detection with respect to the electrical signal output by the transimpedance amplifier TIA 245 is insufficient, by modifying strength of the optical signal output by the local oscillator LO 210 and/or modifying the gain of the transimpedance amplifier TIA 245 before deciding to apply configuration change by selecting at least one configuration modification among the set Li. Indeed, in most arrangements with off-the-shelf components, reactivity of changing ellipticity parameters is less (i.e., takes more time) than reactivity of changing oscillator signal strength, which further in turn is less than reactivity of changing transimpedance amplifier gain (EGC, electrical gain control).

In a step S601, the controlling unit 280 performs signal level detection, and integration or averaging over a predefined quantity of samples, as already explained. Over time, since optical signal received from the coherent optical transmitter is substantially distributed over a dynamics range, signal mean level is representative of the dynamics range.

In a step S602, the controlling unit 280 checks whether suitable mean level is met. In other words, the controlling unit 280 checks whether the mean level of signal over integration or averaging time is above the predefined threshold percentage (e.g., 20%). Moreover, the controlling unit 280 checks whether the mean level of signal over integration or averaging time is below an upper predefined threshold percentage (e.g. 80%), in order to avoid saturation conditions. When the mean level is suitable, the step S601 is repeated, preferably with applying a standby time period; otherwise, a step S603 is performed.

In a step S603, the controlling unit 280 checks whether a signal mean level increase is needed. When there is a need for signal mean level increase, a step S605 is performed; otherwise, a signal mean level decrease is needed and a step S604 is performed.

In the step S604, the controlling unit 280 decreases signal mean level by adjusting gain of the transimpedance amplifier TIA 245 as first priority and decreases signal mean level by adjusting gain of the local oscillator LO 210 (strength of the optical signal output by the local oscillator LO 210) as second priority. In other words, when there is still margin to decrease the gain of the transimpedance amplifier TIA 245, then the controlling unit 280 does so; otherwise, the controlling unit 280 decreases the gain of the local oscillator LO 210. Doing so increases opportunities to operate later on the transimpedance amplifier TIA 245, which enables to react more rapidly in case of need for signal mean level increase, since reactivity of adjustment of the gain of the transimpedance amplifier TIA 245 is better than reactivity of adjustment of the gain of the local oscillator LO 210. Then, the step S601 is repeated, preferably with applying a waiting or standby time period.

In the step S605, the controlling unit 280 checks whether there is still margin either to increase the gain of the transimpedance amplifier TIA 245 or to increase the gain of the local oscillator LO 210. When there is still margin either to increase the gain of the transimpedance amplifier TIA 245 or to increase the gain of the local oscillator LO 210, a step S607 is performed; otherwise, a step S606 is performed.

In the step S606, the controlling unit 280 instructs configuration change by selecting at least one configuration modification among the aforementioned set Li. Since effective achievement of the configuration change may take some non-negligible time, the controlling unit 280 may step-by-step decrease signal mean level by adjusting gain of the transimpedance amplifier TIA 245 as first priority and decreases signal mean level by adjusting gain of the local oscillator LO 210 as second priority while the configuration of the polarization diversity actuator PDA 211 progressively changes. Thus, saturation is avoided when the configuration change of the polarization diversity actuator PDA 211 is effectively in place. Then, the step S601 is repeated, preferably with applying a waiting or standby time period.

In the step S607, the controlling unit 280 increases signal mean level by adjusting gain of the local oscillator LO 210 (strength of the optical signal output by the local oscillator LO 210) as first priority and increases signal mean level by adjusting gain of the transimpedance amplifier TIA 245 as second priority. In other words, when there is still margin to increase the gain of the local oscillator LO 210, then the controlling unit 280 does so; otherwise, the controlling unit 280 increases the gain of the transimpedance amplifier TIA 245. However, in a particular embodiment where evolution of signal mean level shows need for faster adjustment (in view of reactivity of the change of the gain of the local oscillator LO 210), the controlling unit 280 increases the gain of the transimpedance amplifier TIA 245 as first priority in order to benefit from better reactivity. This can be completed by also increasing the gain of the local oscillator LO 210. Then, the step S601 is repeated, preferably with applying a waiting or standby time period.

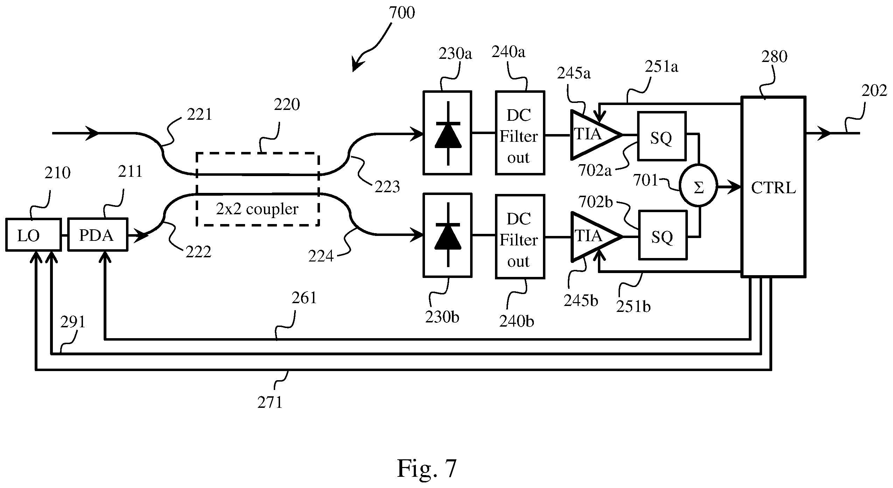

**Fig. 7** schematically represents another coherent optical receiver arrangement 700 that can be used in the optical communications system of Fig. 1A or Fig. 1B.

The arrangement in Fig. 7 also uses two photodiodes. The arrangement in Fig. 7 however differs from the arrangement in Fig. 2 in that the photocurrents respectively provided by the photodiodes 230a and 230b are independently processed and then summed up for further analysis by the controlling unit 280. The photodiodes 230a and 230b do not need to be matched photodiodes in this arrangement.

More precisely, the output of the photodiode 230a is transmitted to a DC (Direct Current) filter 240a. The DC filter 240a is an arrangement removing the continuous component of the analog electrical signal output by the photodiode 230a.

The output of the DC filter 240a is transmitted to a transimpedance amplifier TIA 245a and the output of the transimpedance amplifier TIA 245a is transmitted to a squaring module SQ 702a. The squaring module SQ 702a squares the electrical signal received from the transimpedance amplifier TIA 245a (i.e., the squaring module SQ 702a multiplies the input electrical signal by itself). To do so, the squaring module SQ 702a is for example an analog amplifier with both inputs receiving the electrical signal provided by the transimpedance amplifier TIA 245a.

Similarly, on the other branch, the output of the photodiode 230b is transmitted to a DC filter 240b, which removes the continuous component of the analog electrical signal output by the photodiode 230b. The output of the DC filter 240b is transmitted to a transimpedance amplifier TIA 245b and the output of the transimpedance amplifier TIA 245b is transmitted to a squaring module SQ 702b. The squaring module SQ 702b squares the electrical signal received from the transimpedance amplifier TIA 245b, as for the squaring module SQ 702a with respect to the electrical signal received from the transimpedance amplifier TIA 245a.

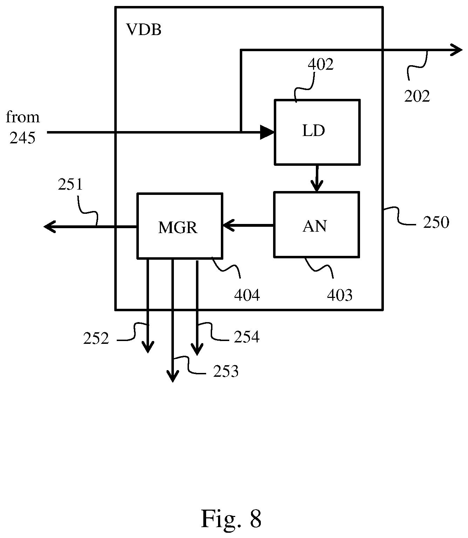

The electrical signals output by the squaring module SQ 702a and 702b are then summed up by an adder 701, both branches thus providing additive contributions. Squaring the electrical signals output by the transimpedance amplifiers TIA 245a and 245b thus avoids that the branches compensates for each other. The electrical signal output by the adder 701 is then monitored and processed by the controlling unit 280, as already explained with respect to the coherent optical receiver arrangement in Fig. 2. The value decision block VDB of the controlling unit 280 does however not contain the squaring module SQ 401 shown in Fig. 4. A suitable arrangement of the value decision block VDB for the coherent optical receiver arrangement of Fig. 7 is shown in **Fig. 8** (which is self-explanatory in view of the disclosure above related to Fig. 4).

As for the coherent optical receiver 200, the controlling unit 280 may control electrical gain of the transimpedance amplifier TIA 245a and of the transimpedance amplifier TIA 245b via respective lines 251a and 251b. Similar electrical gain control adjustments are then performed by the controlling unit 280 to both transimpedance amplifiers TIA 245a and TIA 245b.

**Fig. 9** schematically represents yet another coherent optical receiver arrangement 900 that can be used in the optical communications system of Fig. 1A or Fig. 1B. The coherent optical receiver arrangement 900 is close to the coherent optical receiver arrangement 700 shown in Fig. 7. Here, the output of the DC filter 240a is directly transmitted to the squaring module SQ 702a and the output of the DC filter 240b is directly transmitted to the squaring module SQ 702b. The electrical signals output by the squaring module SQ 702a and 702b are then summed up by the adder 701, and the output of the adder 701 is transmitted to a transimpedance amplifier, such as transimpedance amplifier TIA 245. Summation is performed here in the current domain whereas the summation in the coherent optical receiver arrangement 700 in Fig. 7 is performed in the voltage domain. Thus, the electrical signal output by the transimpedance amplifier TIA 245 is then monitored and processed by the controlling unit 280, as already explained with respect to the coherent optical receiver arrangement in Fig. 2.

As previously, the controlling unit 280 may control electrical gain of the transimpedance amplifier TIA 245 via the line 251.

The arrangement of Fig. 9 thus enables reducing bill of material (BOM) and design complexity, by using a single transimpedance amplifier, which is suitable for optical transmission systems where high signal-to-noise ratio is supposed to be achieved.

**Claims**

1. A coherent optical receiver intended to receive an amplitude-shift keying modulated optical signal from a coherent optical transmitter, comprising:

    - a local oscillator;
    - a polarization-diversity actuator configured for modifying an optical signal output by the local oscillator; so as to form an optical signal with elliptical polarization with main axis orientation $\varphi_l$ and ellipticity phase shift $\psi_l$;
    - a 2 x 2 coupler, having one input aiming at receiving the amplitude-shift keying modulated optical signal received from the coherent optical transmitter and the other input receiving another optical signal which is output by a set formed by a local oscillator and the polarization diversity actuator, so as to enable the local oscillator to provide a boosting effect to the amplitude-shift keying modulated optical signal received from the coherent optical transmitter,
    - two photodiodes, one photodiode of said photodiodes being connected to one output of the 2 x 2 coupler and the other photodiode of said photodiodes being connected to the other output of the 2 x 2 coupler;
    wherein the coherent optical receiver is arranged to combine contributions from both photodiodes in an additive or subtractive manner and to generate an electrical signal representing the combined contributions,
    **characterized in that** the coherent optical receiver further comprises a controlling unit in form of electronic circuitry configured for monitoring said electrical signal and for instructing a configuration change of the polarization diversity actuator by modifying the ellipticity main axis orientation $\varphi_l$ and/or the ellipticity phase shift $\psi_l$ when the electrical signal is below or equal to a predetermined threshold corresponding to a predetermined percentage of theoretical maximum achievable by the boosting effect, and wherein the modification of the ellipticity main axis orientation $\varphi_l$ is performed by applying a predefined shift equal to $\dfrac{\pi}{4}$ and the modification of the ellipticity phase shift $\psi_l$ is performed by applying a predefined shift equal to $\dfrac{\pi}{2}$.

2. The coherent optical receiver according to claim 1, wherein the polarization-diversity actuator comprises a variable waveplate for enabling modification of the ellipticity main axis orientation $\varphi_l$ and for enabling modification of the ellipticity phase shift $\psi_l$.

3. The coherent optical receiver according to any one of claims 1 and 2, wherein the photodiodes are arranged as balanced photodiodes between a positive voltage supply and a negative voltage supply, and wherein the coherent optical receiver is arranged such that, in the subtractive manner, a difference in photocurrents generated by the photodiodes is sent to a transimpedance amplifier that produces an output voltage proportional to that difference which forms said electrical signal monitored by the controlling unit.

4. The coherent optical receiver according to any one of claims 1 and 2, wherein, in the additive manner, each photodiode is followed by a direct current filter then by a transimpedance amplifier followed by a squaring module squaring a voltage electrical signal output by the transimpedance amplifier, wherein the coherent optical receiver further comprises an adder summing up the voltage electrical signals output by the transimpedance amplifiers so as to form said electrical signal monitored by the controlling unit.

5. The coherent optical receiver according to any one of claims 1 and 2, wherein, in the additive manner, each photodiode is followed by a direct current filter then by a squaring module squaring a current electrical signal output by the direct current filter, wherein the coherent optical receiver further comprises an adder summing up the current electrical signals output by the squaring modules, the adder being followed by a transimpedance amplifier so as to form said electrical signal monitored by the controlling unit.

6. The coherent optical receiver according to any one of claims 3 to 5, wherein, in the additive manner, the electronic circuitry is further configured for modifying gain of the local oscillator and/or modifying gain of the transimpedance amplifier before deciding to apply configuration change by selecting at least one configuration modification among modification of the ellipticity main axis orientation $\varphi_l$ and/or modification of the ellipticity phase shift $\psi_l$.

7. The coherent optical receiver according to claim 6, wherein the electronic circuitry is configured for:

- checking whether a mean level of the voltage electrical signal output by the transimpedance amplifier over integration or averaging time is suitable, namely above the predefined threshold percentage and below an upper predefined threshold percentage so as to avoid saturation conditions;
- when the mean level is not suitable in that a signal mean level decrease is needed, decreasing signal mean level by adjusting gain of the transimpedance amplifier as first priority and decreasing signal mean level by adjusting gain of the local oscillator as second priority; and
- when the mean level is not suitable in that a signal mean level increase is needed, checking whether there is still margin either to increase gain of the transimpedance amplifier or to increase gain of the local oscillator, and when such margin exists, increasing signal mean level by adjusting gain of the transimpedance amplifier as first priority and increasing signal mean level by adjusting gain of the local oscillator as second priority, and otherwise, instructing configuration change by selecting at least one configuration modification among modification of the ellipticity main axis orientation $\varphi_l$ and/or modification of the ellipticity phase shift $\psi_l$.

8. The coherent optical receiver according to any one of claims 1 to 7, wherein the controlling unit includes a look-up table that links, on one hand, actuation of modification in the ellipticity main axis orientation $\varphi_l$ and/or of modification of the ellipticity phase shift $\psi_l$ and, on the other hand, commands to be applied to the polarization diversity actuator.

9. The coherent optical receiver according to claim 8, wherein various configurations of the polarization diversity actuator lead to a same modification of the ellipticity main axis orientation $\varphi_l$ and/or of the ellipticity phase shift $\psi_l$, and the look-

up table further contains reactivity information for switching from any current configuration of the polarization diversity actuator to any other targeted configuration of the polarization diversity actuator, and the electronic circuitry is configured for, when changing configuration of the configuration of the polarization diversity actuator, selecting the configuration of the polarization diversity actuator which implies the shortest adjustment time in view of a current configuration of the polarization diversity actuator.

10. An Optical Network Unit intended to be used in a Passive Optical Network, wherein the Optical Network Unit includes the coherent optical receiver according to any one of claims 1 to 9 for receiving an amplitude-shift keying modulated optical signal transmitted by a coherent optical transmitter included in an Optical Line Terminal of the Passive Optical Network.

**Patentansprüche**

1. Kohärenter optischer Empfänger, der dazu bestimmt ist, ein durch Amplitudenumtastung moduliertes optisches Signal von einem kohärenten optischen Sender zu empfangen, umfassend:

- einen Lokaloszillator;
- einen Polarisationsdiversitätsaktuator, der zum Verändern eines optischen Signals ausgebildet ist, das von dem Lokaloszillator ausgegeben wird; um ein optisches Signal mit elliptischer Polarisierung mit Hauptachsenorientierung $\varphi_l$ und Elliptizitäts-Phasenverschiebung $\psi_l$ zu bilden;
- einen 2x2-Koppler mit einem Eingang zum Empfangen des durch Amplitudenumtastung modulierten optischen Signals, das von dem kohärenten optischen Sender empfangen wird, und dem anderen Eingang, der ein anderes optisches Signal empfängt, das von einem Satz ausgegeben wird, der von dem Lokaloszillator und dem Polarisationsdiversitätsaktuator gebildet wird, um es dem Lokaloszillator zu ermöglichen, dem durch Amplitudenumtastung modulierten optischen Signal, das von dem kohärenten optischen Sender empfangen wird, eine Boostwirkung zu verleihen,
- zwei Photodioden, wobei eine Photodiode der Photodioden mit einem Ausgang des 2x2-Kopplers und die andere Photodiode der Photodioden mit dem anderen Ausgang des 2x2-Kopplers verbunden ist;

wobei der kohärente optische Empfänger dafür angeordnet ist, Beiträge von beiden Photodioden auf eine additive oder subtraktive Weise zu kombinieren und ein elektrisches Signal zu generieren, das die kombinierten Beiträge darstellt,

**dadurch gekennzeichnet, dass** der kohärente optische Empfänger ferner eine Steuereinheit in Form einer elektronischen Schaltung umfasst, die zur Überwachung des elektrischen Signals und zur Anweisung einer Konfigurationsänderung des Polarisationsdiversitätsaktuators ausgebildet ist, indem die Elliptizitäts-Hauptachsenorientierung $\varphi_l$ und/oder die Elliptizitäts-Phasenverschiebung $\psi_l$ verändert wird, wenn das elektrische Signal unterhalb oder gleich einer vorbestimmten Schwelle ist, die einem vorbestimmten Prozentsatz eines theoretischen Maximums entspricht, das durch die Boostwirkung erreichbar ist, und wobei die Veränderung der Elliptizitäts-Hauptachsenorientierung $\varphi_l$ durch Anwendung einer vorgegebenen Verschiebung gleich $\frac{\pi}{4}$ durchgeführt wird und die Veränderung der Elliptizitäts-Phasenverschiebung $\psi_l$ durch Anwendung einer vorgegebenen Verschiebung gleich $\frac{\pi}{2}$ durchgeführt wird.

2. Kohärenter optischer Empfänger nach Anspruch 1, wobei der Polarisationsdiversitätsaktuator eine variable Wellenplatte zur Ermöglichung der Veränderung der Elliptizitäts-Hauptachsenorientierung $\varphi_l$ und zur Ermöglichung der Veränderung der Elliptizitäts-Phasenverschiebung $\psi_l$ umfasst.

3. Kohärenter optischer Empfänger nach einem der Ansprüche 1 und 2, wobei die Photodioden als symmetrische Photodioden zwischen einer positiven Spannungsversorgung und einer negativen Spannungsversorgung angeordnet sind, und wobei der kohärente optische Empfänger so angeordnet ist, dass bei der subtraktiven Weise eine Differenz in Photoströmen, die durch die Photodioden generiert werden, an einen Transimpedanzverstärker gesendet wird, der eine Ausgangsspannung erzeugt, die zu jener Differenz proportional ist, die das elektrische Signal bildet, das durch die Steuereinheit überwacht wird.

4. Kohärenter optischer Empfänger nach einem der Ansprüche 1 und 2, wobei bei der additiven Weise auf jede Photodiode ein Gleichstromfilter, dann ein Transimpedanzverstärker folgt, auf den ein Quadriermodul folgt, das ein elektrisches Spannungssignal quadriert, das vom Transimpedanzverstärker ausgegeben wird, wobei der kohärente optische Empfänger ferner einen Addierer umfasst, der die elektrischen Spannungssignale aufsummiert, die von den Transimpedanzverstärkern ausgegeben werden, um das elektrische Signal zu bilden, das durch die Steuereinheit überwacht wird.

5. Kohärenter optischer Empfänger nach einem der Ansprüche 1 und 2, wobei bei der additiven Weise auf jede Photodiode ein Gleichstromfilter, dann ein Quadriermodul folgt, das ein elektrisches Stromsignal quadriert, das vom Gleichstromfilter ausgegeben wird, wobei der kohärente optische Empfänger ferner einen Addierer umfasst, der die elektrischen Stromsignale aufsummiert, die von den Quadriermodulen ausgegeben werden, wobei auf den Addierer ein Transimpedanzverstärker folgt, um das elektrische Signal zu bilden, das durch die Steuereinheit überwacht wird.

6. Kohärenter optischer Empfänger nach einem der Ansprüche 3 bis 5, wobei bei der additiven Weise die elektronische Schaltung ferner dazu ausgebildet ist, eine Verstärkung des Lokaloszillators zu verändern und/oder eine Verstärkung des Transimpedanzverstärkers zu verändern, bevor sie entscheidet, die Konfigurationsänderung durch Auswahl wenigstens einer Konfigurationsveränderung aus einer Veränderung der Elliptizitäts-Hauptachsenorientierung $\varphi_l$ und/oder Veränderung der Elliptizitäts-Phasenverschiebung $\psi_l$ anzuwenden.

7. Kohärenter optischer Empfänger nach Anspruch 6, wobei die elektronische Schaltung für Folgendes ausgebildet ist:

 - Prüfen, ob ein Durchschnittspegel des elektrischen Spannungssignals, das vom Transimpedanzverstärker über eine Integrations- oder Mittelungszeit ausgegeben wird, geeignet ist, also über dem vordefinierten Schwellenprozentsatz und unter einem oberen vordefinierten Schwellenprozentsatz liegt, um Sättigungsbedingungen zu vermeiden;
 - wenn der Durchschnittspegel dadurch, dass eine Signaldurchschnittspegel-Verringerung nötig ist, nicht geeignet ist, Verringern des Signaldurchschnittspegels durch Einstellung der Verstärkung des Transimpedanzverstärkers als erste Priorität und Verringern des Signaldurchschnittspegels durch Einstellung der Verstärkung des Lokaloszillators als zweite Priorität; und
 - wenn der Durchschnittspegel dadurch, dass eine Signaldurchschnittspegel-Erhöhung nötig ist, nicht geeignet ist, Prüfen, ob noch Spielraum entweder zum Erhöhen der Verstärkung des Transimpedanzverstärkers oder zum Erhöhen der Verstärkung des Lokaloszillators vorliegt, und wenn dieser Spielraum vorliegt, Erhöhen des Signaldurchschnittspegels durch Einstellung der Verstärkung des Transimpedanzverstärkers als erste Priorität und Erhöhen des Signaldurchschnittspegels durch Einstellung der Verstärkung des Lokaloszillators als zweite Priorität, und anderenfalls Anweisen einer Konfigurationsänderung durch Auswahl wenigstens einer Konfigurationsveränderung aus einer Veränderung der Elliptizitäts-Hauptachsenorientierung $\varphi_l$ und/oder Veränderung der Elliptizitäts-Phasenverschiebung $\psi_l$.

8. Kohärenter optischer Empfänger nach einem der Ansprüche 1 bis 7, wobei die Steuereinheit eine Lookup-Tabelle beinhaltet, die eine Auslösung einer Veränderung in der Elliptizitäts-Hauptachsenorientierung $\varphi_l$ und/oder einer Veränderung der Elliptizitäts-Phasenverschiebung $\psi_l$ einerseits und Befehle zur Anwendung auf den Polarisationsdiversitätsaktuator andererseits verknüpft.

9. Kohärenter optischer Empfänger nach Anspruch 8, wobei verschiedene Konfigurationen des Polarisationsdiversitätsaktuators zu einer gleichen Veränderung der Elliptizitäts-Hauptachsenorientierung $\varphi_l$ und/oder der Elliptizitäts-Phasenverschiebung $\psi_l$ führen und die Lookup-Tabelle ferner Reaktivitätsinformationen zur Umschaltung von einer beliebigen aktuellen Konfiguration des Polarisationsdiversitätsaktuators zu einer beliebigen anderen Zielkonfiguration des Polarisationsdiversitätsaktuators enthält und die elektronische Schaltung dazu ausgebildet ist, wenn eine Konfiguration der Konfiguration des Polarisationsdiversitätsaktuators geändert wird, die Konfiguration des Polarisationsdiversitätsaktuators auszuwählen, die im Hinblick auf eine aktuelle Konfiguration des Polarisationsdiversitätsaktuators die kürzeste Einstellzeit bedeutet.

10. Optische Netzwerkeinheit, die dazu bestimmt ist, in einem passiven optischen Netzwerk verwendet zu werden, wobei die optische Netzwerkeinheit den kohärenten optischen Empfänger nach einem der Ansprüche 1 bis 9 zum Empfang eines durch Amplitudenumtastung modulierten optischen Signals beinhaltet, das von einem kohärenten optischen Sender gesendet wird, der in einer optischen Leitungsklemme des passiven optischen Netzwerks enthalten ist.

**Revendications**

1. Récepteur optique cohérent destiné à recevoir un signal optique modulé par déplacement d'amplitude provenant d'un émetteur optique cohérent, comprenant :

   - un oscillateur local ;
   - un actionneur à diversité de polarisation configuré pour modifier un signal optique délivré en sortie par l'oscillateur local, de manière à former un signal optique à polarisation elliptique avec une orientation d'axe principal $\varphi_l$ et un décalage de phase d'ellipticité $\psi_l$ ;
   - un coupleur 2 x 2, ayant une entrée destinée à recevoir le signal optique modulé par déplacement d'amplitude reçu de l'émetteur optique cohérent et l'autre entrée destinée à recevoir un autre signal optique qui est délivré en sortie par un ensemble formé par un oscillateur local et l'actionneur à diversité de polarisation, de manière à permettre à l'oscillateur local de fournir un effet d'amplification au signal optique modulé par déplacement d'amplitude reçu de l'émetteur optique cohérent,
   - deux photodiodes, une photodiode desdites photodiodes étant connectée à une sortie du coupleur 2 x 2 et l'autre photodiode desdites photodiodes étant connectée à l'autre sortie du coupleur 2 x 2 ;
   le récepteur optique cohérent étant agencé pour combiner les contributions des deux photodiodes de manière additive ou soustractive et pour générer un signal électrique représentant les contributions combinées,
   le récepteur optique cohérent étant **caractérisé en ce qu'**il comprend en outre une unité de commande sous la forme d'un circuit électronique configuré pour surveiller ledit signal électrique et pour ordonner un changement de configuration de l'actionneur à diversité de polarisation en modifiant l'orientation d'axe principal d'ellipticité $\varphi_l$ et/ou le décalage de phase d'ellipticité $\psi_l$ lorsque le signal électrique est inférieur ou égal à un seuil prédéterminé correspondant à un pourcentage prédéterminé du maximum théorique pouvant être atteint par l'effet d'amplification, et dans lequel la modification de l'orientation d'axe principal d'ellipticité $\varphi_l$ est réalisée en appliquant un décalage prédéfini égal à $\dfrac{\pi}{4}$ et la modification du décalage de phase d'ellipticité $\psi_l$ est réalisée en appliquant un décalage prédéfini égal à $\dfrac{\pi}{2}$ .

2. Récepteur optique cohérent selon la revendication 1, dans lequel l'actionneur à diversité de polarisation comprend une lame-onde variable pour permettre la modification de l'orientation d'axe principal d'ellipticité $\varphi_l$ et pour permettre la modification du décalage de phase d'ellipticité $\psi_l$.

3. Récepteur optique cohérent selon l'une quelconque des revendications 1 et 2, dans lequel les photodiodes sont agencées en tant que photodiodes équilibrées entre une alimentation en tension positive et une alimentation en tension négative, et le récepteur optique cohérent étant agencé de sorte que, de manière soustractive, une différence entre les courants photoélectriques générés par les photodiodes est envoyée à un amplificateur à transimpédance qui produit une tension de sortie proportionnelle à cette différence, laquelle forme ledit signal électrique surveillé par l'unité de commande.

4. Récepteur optique cohérent selon l'une quelconque des revendications 1 et 2, dans lequel, de manière additive, chaque photodiode est suivie d'un filtre à courant continu puis d'un amplificateur à transimpédance suivi d'un module élévateur au carré mettant au carré un signal électrique de tension délivré en sortie par l'amplificateur à transimpédance, le récepteur optique cohérent comprenant en outre un additionneur additionnant les signaux électriques de tension délivrés en sortie par les amplificateurs à transimpédance de manière à former ledit signal électrique surveillé par l'unité de commande.

5. Récepteur optique cohérent selon l'une quelconque des revendications 1 et 2, dans lequel, de manière additive, chaque photodiode est suivie d'un filtre à courant continu puis d'un module élévateur au carré mettant au carré un signal électrique de courant délivré en sortie par le filtre à courant continu, le récepteur optique cohérent comprenant en outre un additionneur additionnant les signaux électriques de courant délivrés en sortie par les modules élévateurs au carré, l'additionneur étant suivi d'un amplificateur à transimpédance de manière à former ledit signal électrique surveillé par l'unité de commande.

6. Récepteur optique cohérent selon l'une quelconque des revendications 3 à 5, dans lequel, de manière additive, le circuit électronique est en outre configuré pour modifier le gain de l'oscillateur local et/ou modifier le gain de l'amplificateur à transimpédance avant de décider d'appliquer un changement de configuration en sélectionnant au moins une modification de configuration parmi la modification de l'orientation d'axe principal d'ellipticité $\varphi_I$ et/ou la modification du décalage de phase d'ellipticité $\psi_I$.

**7.** Récepteur optique cohérent selon la revendication 6, dans lequel le circuit électronique est configuré pour :

- vérifier si un niveau moyen du signal électrique de tension délivré en sortie par l'amplificateur à transimpédance sur une période d'intégration ou de moyennage est approprié, c'est-à-dire supérieur au pourcentage seuil prédéfini et inférieur à un pourcentage seuil supérieur prédéfini de manière à éviter les conditions de saturation ;
- lorsque le niveau moyen n'est pas approprié dans la mesure où une diminution du niveau moyen du signal est nécessaire, diminuer le niveau moyen du signal en réglant le gain de l'amplificateur à transimpédance en priorité, et diminuer le niveau moyen du signal en réglant le gain de l'oscillateur local en second lieu ; et
- lorsque le niveau moyen n'est pas approprié dans la mesure où une augmentation du niveau moyen du signal est nécessaire, vérifier s'il existe encore une marge pour augmenter le gain de l'amplificateur à transimpédance ou pour augmenter le gain de l'oscillateur local, et lorsque cette marge existe, augmenter le niveau moyen du signal en réglant le gain de l'amplificateur à transimpédance en priorité, et augmenter le niveau moyen du signal en réglant le gain de l'oscillateur local en second lieu, et sinon, ordonner un changement de configuration en sélectionnant au moins une modification de configuration parmi la modification de l'orientation d'axe principal d'ellipticité $\varphi_I$ et/ou la modification du décalage de phase d'ellipticité $\psi_I$.

**8.** Récepteur optique cohérent selon l'une quelconque des revendications 1 à 7, dans lequel l'unité de commande comprend une table de consultation qui relie, d'une part, l'activation de la modification de l'orientation d'axe principal d'ellipticité $\varphi_I$ et/ou de la modification du décalage de phase d'ellipticité $\psi_I$ et, d'autre part, les instructions à appliquer à l'actionneur à diversité de polarisation.

**9.** Récepteur optique cohérent selon la revendication 8, dans lequel différentes configurations de l'actionneur à diversité de polarisation conduisent à une même modification de l'orientation de l'axe principal d'ellipticité $\varphi_I$ et/ou du décalage de phase d'ellipticité $\psi_I$, et la table de consultation contient en outre des informations de réactivité pour commuter de toute configuration actuelle de l'actionneur à diversité de polarisation vers toute autre configuration ciblée de l'actionneur à diversité de polarisation, et le circuit électronique est configuré pour, lors du changement de configuration de la configuration de l'actionneur à diversité de polarisation, sélectionner la configuration de l'actionneur à diversité de polarisation qui implique le temps de réglage le plus court compte tenu d'une configuration actuelle de l'actionneur à diversité de polarisation.

**10.** Unité de réseau optique destinée à être utilisée dans un réseau optique passif, l'unité de réseau optique comprenant le récepteur optique cohérent selon l'une quelconque des revendications 1 à 9 pour recevoir un signal optique modulé par déplacement d'amplitude transmis par un émetteur optique cohérent inclus dans un terminal de ligne optique du réseau optique passif.

Fig. 1A

Fig. 1B

Fig. 2

Fig. 3

Fig. 4

S501

Integration and level detection

Comparison  S502

yes    OK?    no

S504    S503

Ellipticity modification

Fig. 5

Integration and level detection

S601

yes    Suitable mean level ?    no

S602    yes    Need for increase ?    no

S603

S605    S604

no    Remaining margin for LO strength and EGC?    yes    EGC adjustment (first priority), LO strength adjustment (second priority)

606

Ellipticity modification

LO strength adjustment (first priority), EGC adjustment (second priority)

S607

Fig. 6

Fig. 7

EP 4 117 202 B1

VDB

402

202

from
245

LD

251

250

MGR

AN

404

403

252

254

253

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0260745 A1

- WO 8607513 A1

### Non-patent literature cited in the description

- IMT Vision: Framework and overall objectives of the future development of IMT for 2020 and beyond. *ITU-R M.2083*, September 2015
- Study on new radio access technology: Radio access architecture and interfaces. *3GPP TR 38.801 V 14.0.0,* March 2017

- **K. KIKUCHI**. Fundamentals of Coherent Optical Fiber Communications. *Journal of Lightwave Technology*, January 2016, vol. 34 (1)
- **NOÉ et al.** Endless Polarization Control Systems for Coherent Optics. *IEEE Journal of Lightwave Technology*, July 1988, vol. 6, 1199-1207